# EUROPÄISCHE PATENTSCHRIFT

(11) **EP 0 792 895 B1**
(45) Veröffentlichungstag und Bekanntmachung des Hinweises auf die Patenterteilung: **16.05.2001**
(21) Anmeldenummer: 97101161.4
(22) Anmeldetag: 25.01.1997
(51) Int. Cl.: C08G 4/00, C08G 2/14, C08G 2/18

(54) **Acrolein freisetzende Copolymere**
Acrolein releasing copolymers
Copolymères liberant de l'acroléine

(30) Priorität: 22.02.1996 DE 19606495; 20.12.1996 DE 19653303
(43) Veröffentlichungstag der Anmeldung: 03.09.1997
(73) Patentinhaber: Degussa AG, 40474 Düsseldorf (DE)
(72) Erfinder: Werle, Peter, Dr., 63571 Gelnhausen (DE); Trageser, Martin, 63571 Gelnhausen (DE); Krimmer, Hans-Peter, Dr., 63128 Dietzenbach (DE); Kunz, Franz-Rudolf, 63526 Erlensee (DE)

(56) Entgegenhaltungen:
- WO-A-88/04671
- DE-A- 4 404 404
- DE-B- 1 047 432
- DE-B- 1 059 662
- DE-C- 746 901
- DE-C- 3 205 487
- US-A- 3 843 684

## Beschreibung

Die Erfindung betrifft Acrolein freisetzende Copolymere, das Verfahren zu ihrer Herstellung und ihre Verwendung als Biocid.

Es ist bekannt, monomeres Acrolein (2-Propenal) als sehr effektives Biozid bei der Behandlung von Wasserkanälen einzusetzen, um unerwünschten Algen- und Pflanzenwuchs zu unterdrücken. Ebenfalls kann es zur Bekämpfung von sulfatreduzierenden Bakterien bei der Erdölexploration eingesetzt werden.

Weitere Anwendungsbereiche für die biozide Wirkung des monomeren Acroleins sind bisher aufgrund der hohen Reaktivität nicht erschlossen worden. So haben Untersuchungen ergeben, daß Acrolein in Abhängigkeit vom pH-Wert in wäßrigen Systemen raschen Veränderungen, wie beispielsweise der Hydratation oder Polymerisation, unterliegt (s. Figur 3). Daher ist es bislang auch nicht möglich gewesen Acrolein als Konservierungsstoff mit langanhaltender Wirkung einzusetzen. Wegen seiner Neigung bei unsachgemäßer Behandlung spontan und gegebenenfalls explosionsartig zu polymerisieren kann es nur unter besonderen Sicherheitsmaßnahmen gehandhabt werden. Es hat eine starke Reizwirkung auf die Atmungsorgane und die Augen. Selbst in stabilisierter Form ist Acrolein nur begrenzt lagerfähig.

Es ist bekannt, Copolymere des Acroleins mit Formaldehyd, die durch Kondensation von Acrolein und Formaldehyd im molaren Verhältnis zwischen 1 : 1 und 1 : 10 in Gegenwart eines basischen Katalysators hergestellt wurden, als Biozide für wäßrige Systeme einzusetzen (DE-B 32 05 484). Die bekannten Copolymere des Acroleins mit Formaldehyd haben den Nachteil, daß sie ca. 15 % freien, nicht umgesetzten Formaldehyd enthalten.

Es ist bekannt, Homopolymere des Acroleins als Biozide einzusetzen (EP-A 0 339 044). Die Polymerisation wird überwiegend radikalisch durchgeführt. Hierbei sollen die sich ausbildenden Polyaldehydstrukturen Träger der biociden Wirkung sein (strukturelle Ähnlichkeit mit Glutaraldehyd). Die Bildung von freiem Acrolein wird nicht erwähnt. Die radikalisch erzeugten Homopolymere des Acroleins sind nachteiligerweise in organischen Medien oder in Wasser nicht löslich und zeigen in Form einer wäßrigen Suspension nur eine sehr niedrige biologische Aktivität.

Die in der deutschen Patentanmeldung P 44 04 404 beschriebene Herstellung von Polyacroleinen ist problematisch, weil die Ausbeuten bei der Umsetzung des Acroleins mit NaOH im wäßrigen System nur 75 - 80 % an polymerem Material betragen. Es fallen also Mutterlauge und Waschwasser, die organische Stoffe enthalten und daher aufwendig entsorgt werden müssen, an. Eine Recyclierung ist wegen negativen Einflusses auf die Polymereigenschaften nicht möglich. Auch diese Polymere sind nahezu unlöslich in Wasser.

Bislang nicht beschrieben sind Acroleinpolymere oder Copolymere, die als Acroleindepotstoff dienen. Das unter geeigneten Bedingungen kontinuierlich in geringen Mengen freigesetzte monomere Acrolein sollte dabei als biozider Wirkstoff, der über lange Zeit aus dem Polymer oder Copolymer nachgebildet wird, wirken.

Die vorliegende Erfindung hat sich die Aufgabe gestellt, derartige Produkte zu entwickeln, und technisch einfache Verfahren zu ihrer Herstellung aufzuzeigen.

Es bestand somit die Aufgabe, Acroleinpolymere, die eine gute biocide Wirksamkeit aufweisen und einfach zu handhaben sind, herzustellen.

Gegenstand der Erfindung sind Acrolein freisetzende Copolymere, hergestellt aus Acrolein und einem oder mehreren mehrwertigen Alkoholen, welche gekennzeichnet sind durch:

Freisetzung von monomerem Acrolein in wäßrigen Systemen. Vorzugsweise kann die Frisetzung des Acroleins mit einem pH-Wert > 7 und dadurch bedingter lang anhaltender Wirkung auf Mikroorganismen erfolgen.

Ein weiterer Gegenstand der Erfindung ist ein Verfahren zur Herstellung der Acrolein freisetzende Copolymere, welches dadurch gekennzeichnet ist, daß man Acrolein zu dem polymerisierbaren Reaktionsmedium, das im wesentlichen wasserfrei ist und in dem der für die Copolymerisation notwendige Katalysator aus der Gruppe der Alkali- und/oder Erdalkalihydrogensulfite, basischen anorganischen Verbindungen und/oder basischen organischen Verbindungen gelöst ist, zugibt und die Temperatur des Reaktionsmediums nicht über 50 °C steigen läßt.
Das Verhältnis Acrolein und Katalysator kann im Bereich von 1 : 0,001 bis 1 : 0,05 liegen.
Die nach vollständigem Eintrag des Acroleins einzuhaltende Nachrührzeit kann 0,5 - 3 h, vorzugsweise 1 - 2 h betragen. Gegebenenfalls können geringe Restmengen an monomerem Acrolein (Umsetzung üblicherweise > 99,5 %) durch kurzfristiges Anlegen eines Vakuums entfernt werden. Die Reaktionslösung wird durch Säurezusatz neutralisiert.

Der Gegenstand der Erfindung sind wasserlösliche oder in Gegenwart eines Emulgators wasserlösliche oder wasserdispergierbar werdende und in wäßrigem Medium monomeres Acrolein freisetzende Acroleinpolymere, welche dadurch gekennzeichnet sind, daß Acrolein mit einem mehrwertigen Alkohol zu diesen Polymeren umgesetzt und der verwendete Alkohol zumindest anteilig in das Polymergerüst eingebaut wird. Das Reaktionsmedium ist im wesentlichen wasserfrei. Als für die Copolymerisation geeignetes Reaktionsmedium können sowohl ein oder mehrere mehrwertige Alkohole, wie 1,2-Ethandiol, 1,3-Propandiol, 1,2-Propandiol, 1,4-Butandiol, Glycerin, Cyclohexandiole oder/und Polyethylenglykole, eingesetzt werden. Bevorzugt können zweiwertige Alkohole der aliphatischen Reihe eingesetzt werden. Besonders bevorzugt ist die Umsetzung in Ethylenglykol oder 1,2-Propandiol.

Als Katalysator Verbindungen aus der Gruppe der Alkali- und/oder Erdalkalihydrogensulfite, basischen anorganischen Verbindungen und/oder basischen organischen Verbindungen eingesetzt. Als basischer Katalysator können Alkalihydroxide, wie z.B. Natriumhydroxid, Alkalialkoholate oder org. Basen, wie zum Beispiel Piperidin, Guanidin, Piperazin etc., verwendet werden.

Überraschenderweise läßt sich die Copolymerisation auch im schwach sauren Medium mit Hydrogensulfitsalzen, MeHSO₃ (Me=Li, Na, K, NH₄⁺. Rb, Cs) von Alkali- und/oder Erdalkalimetallen als Katalysator durchführen. Man erhält hier völlig farblose Polymerisate.

Die durch die Umsetzung gebildeten farblosen oder schwach gelb gefärbten viskosen Lösungen enthalten nahezu kein freies Acrolein mehr. Sie stellen Copolymerisate des Acroleins mit dem Lösungsmittel dar.

Mittels GPC-MALLS-Analyse (Muti Angle Laser Light Scattering (MALLS), Wyatt MiniDAWN und RI-Detektion nach Chromatographie mit Tetrahydrofuran an einer SDV-5µ-100Ä-Phase) werden für die Produkte mittlere Molekulargewichte von 3000 - 6000 g/mol in einem Bereich von 1000 - 10000 g/mol bestimmt (siehe Beispiel 4). Der Alkohol- und Wassergehalt können durch die Reaktionsführung variabel eingestellt werden und betragen in Summe ca. 40 - 50 %.

Im Falle des Copolymers aus 1,2- Propylenglykol und Acrolein werden im ¹³C-NMR-Spektrum (125 MHz, DMSO-d₆/303 K) werden Doppelbindungen des Typs R-CH=CH₂ und Aldehydfunktionen als breite Signale in sehr geringem Maße delektiert : δ117 (=CH₂), δ136 (-CH=) und δ200 (-CHO). Daneben enthalten die Spektren folgende strukturelle Daten : δ16.7/20.1 (-CH₃), δ63-77 (OCH₂ und OCH Gruppen) und δ90 - 100 (Acetal). Das H,C-COSY-Korrelationsexperiment zeigt praktisch keine Signalintensität für aliphatische CH-Gruppen (schwaches Signal bei δ43), wie sie für ein Polyacrolein, das über die Doppelbindung polymerisiert ist, erwartet werden.

Insgesamt sind die spektroskopischen Daten mit einem Polyacrolein folgender Struktur vereinbar (y > x ≥ 1):

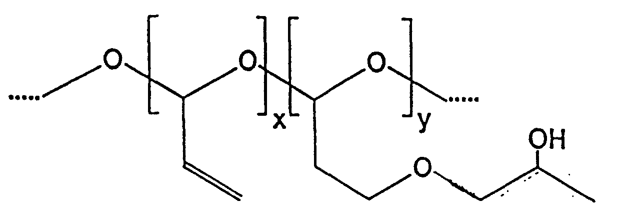

Das erhaltene Copolymer ist mit Wasser nur begrenzt mischbar (etwa 1:1). Bei stärkeren Verdünnungen kommt es zur Bildung von milchigen Emulsionen, aus denen beim Stehen sich ein Teil des Copolymersen als schmierige, viskose Flüssigkeit abscheidet. Dieses Verhalten erschwert die Handhabungen des erfindungsgemäßen Copolymers, da beispielsweise Behältnisse nicht einfach durch Spülen mit Wasser gereinigt werden können. Überraschend wurde gefunden, daß durch Zusatz eines Emulgators völlige Wassermischbarkeit des Copolymers erzielt wird, daß vornehmlich auch starke Verdünnungen keinerlei Trübung oder Tyndall-Effekte aufweisen, sondern sich als physikalisch echte Lösungen darstellen. Der Emulgator wird üblicherweise in Mengen von 0,5 - 2 %, vorzugsweise 0,75 - 1 % bezogen auf das Gesamtgewicht der Copolymerlösung eingesetzt.

Bei dem verwendeten Emulgator handelt es sich bevorzugt um Alkalisalze von Sulfobernsteinsäureestern der allgemeinen Formel

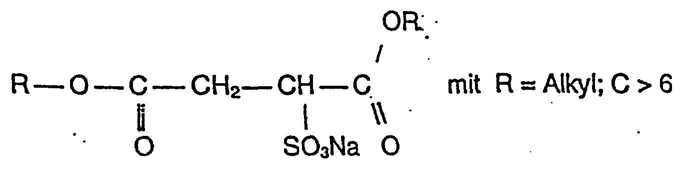

Besonders bevorzugt ist der Diethylhexylester.

Der Zusatz kann während oder nach der Copolymerisation erfolgen.

Das Verhältnis Alkohol : Acrolein kann über weite Grenzen variiert werden und wird häufig durch die Handhabbarkeit der mit zunehmender Acroleinkonzentration hochviskos werdenden Lösungen begrenzt. Für Ethylenglykol oder 1,2-Propandiol können Gewichtsverhältnisse bis 1 : 1, das heißt, 50 Gew.-%ige Lösungen an polymerisiertem Acrolein hergestellt werden. Höhere Konzentrationen sind nur noch begrenzt fließfähig. Vorzugsweise werden Umsetzungen mit einem Verhältnis an mehrwertigen Alkoholen zu Acrolein von etwa 1 : 0,4 bis 1 : 0,7, durchgeführt. Um die Viskosität der Produkte zu verringern, kann während der Zugabe des Acroleins Wasser in das System eingebracht werden, ohne daß es zu einer Fällung von polymerem Acrolein kommt.

Die erfindungsgemäßen Acroleinpolymere stellen wegen ihrer Fähigkeit in wäßrigen Systemen, vorzugsweise bei pH-Werten größer als sieben, Acrolein über einen langen Zeitraum kontinuierlich freizusetzen, wirksame Konservierungsmittel dar.

Ein weiterer Gegenstand der Erfindung ist ein Verfahren zur Konservierung von Stoffen, welches dadurch gekennzeichnet ist, daß man die erfindungsgemäßen Acroleincopolymere als monomeres Acrolein freisetzende Stoffe wäßrigen Systemen oder wäßrigen Dispersionen oder Suspensionen zusetzt:

Zum Beispiel können die folgenden Stoffe mit den erfindungsgemäßen Acroleincopolymeren konserviert werden:

Kunststoffdispersionen, Wandanstriche, Farbstoffteige und Pasten, Dichtungsmassen, Leimfarben, Holzschutzlacke, Klebstoffemulsionen, Haut- und Lederleime, Knochenleime, Stärkeleime, Casein-Leime, Dextrin-Klebstoffe, Salzhäute, Pickellösungen, Trockenhäute, Gerbbrühe, feuchtes Chromleder, Fertigleder, Spinnbäder, Wachsemulsionen, Waschrohstoffe, Textilausrüstung, Textilappreturen, Papier/Pappe, PVC-Beschichtung, Bohr- und Schneideöle (verdünnt), Bohr- und Schneideöle (konzentriert), Holzkonservierung, Cellulosefaser (Verrottungsschutz), Verfugungszement, Schiffsfarben, flüssige Reinigungsmittel.

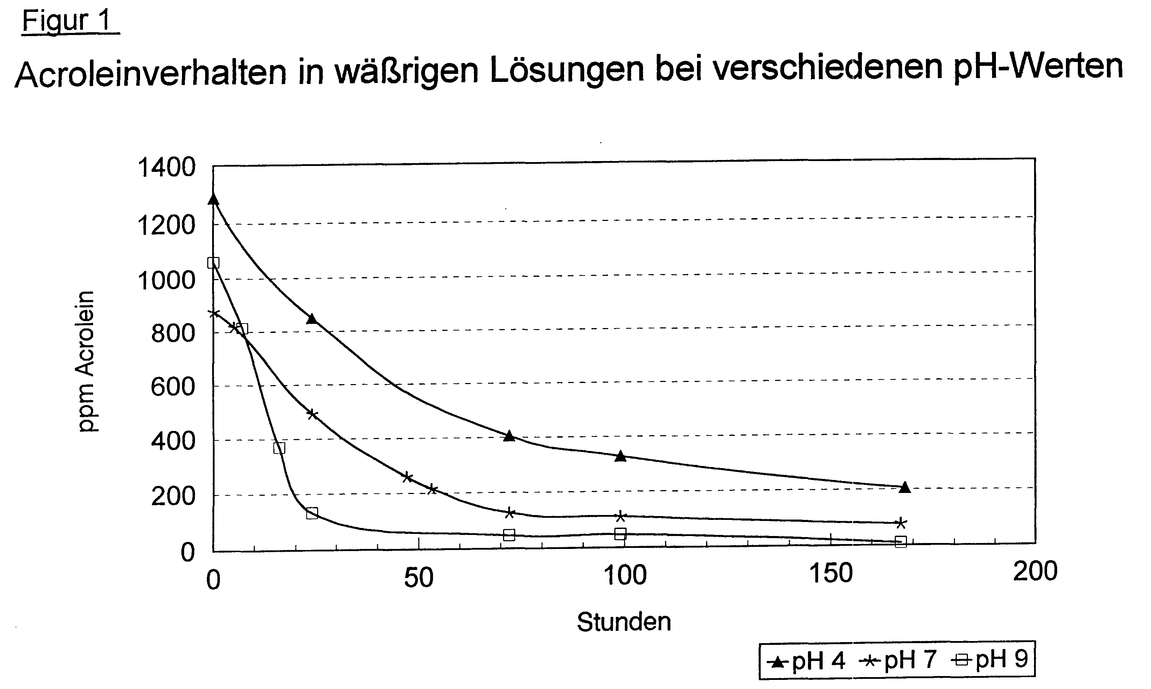

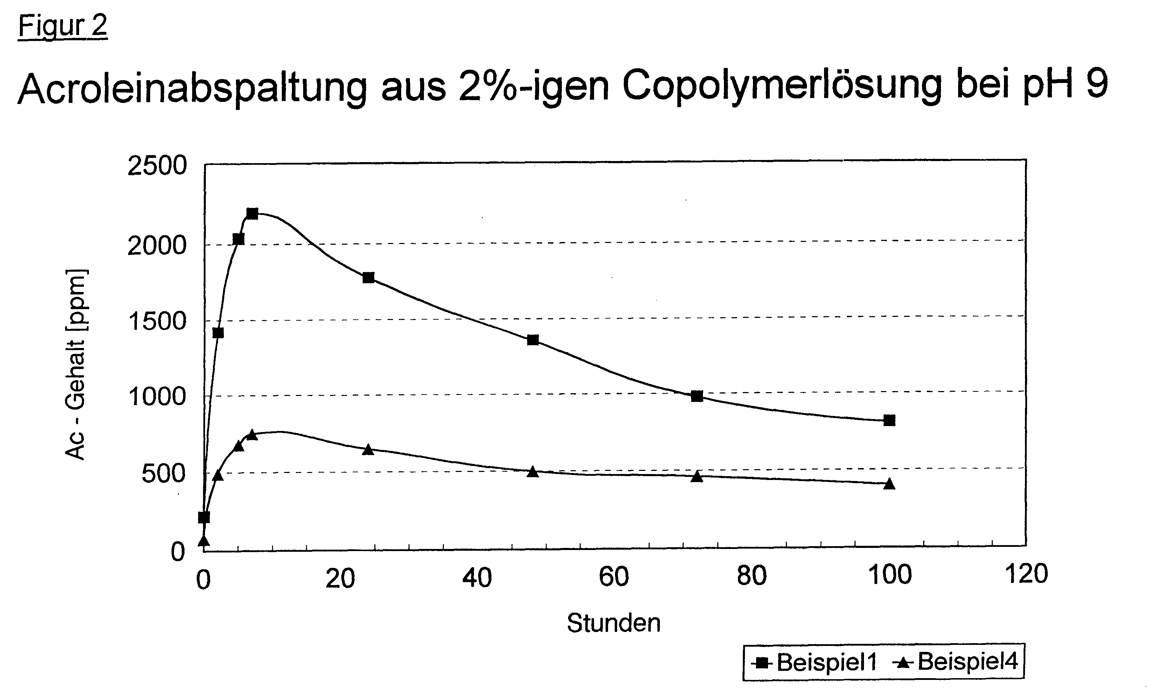

Die erfindungsgemäßen Acroleincopolymere können dabei in Mengen von 0,01 - 0,3 % den Stoffen zugesetzt werden. Eine besonders bevorzugte Ausführungsform der Erfindung ist das Copolymer aus Acrolein und Ethylenglykol beziehungsweise 1,2-Propandiol.
Das erstere kann darüberhinauswegen seiner guten algiziden Wirkung auch zur Bekämpfung von Algenwachstum in Kühlkreisläufen eingesetzt werden. Weiterhin bekämpft es auch höhere Wasserunkräuter. Die Wirksamkeit besteht darin, daß die erfindungsgemäßen Copolymere in wäßriger Phase Acrolein abspalten. Die Abspaltung ist abhängig von dem pH-Wert der wäßrigen Lösung und von dem verwendeten Polyalkohol. In Figur 2 wird die Acroleinfreisetzung in Abhängigkeit von der Zeit bei einem pH-Wert von 9 graphisch dargestellt.

### Beispiele

### Beispiel 1

270 ml Ethylenglykol und 2,5 ml 1-N NaOH werden vorgelegt. Unter Kühlung werden bei 5 - 25 °C (Endtemperatur) 237 ml Acrolein zugegeben. Man rührt 1 h bei Raumtemperatur nach und neutralisiert mit 2,5 ml 1-N-HCl.
- Ausbeute:: 500 g einer fast farblosen, schwachgelben, viskosen Flüssigkeit.
Der Gehalt an nicht umgesetztem Ethylenglykol liegt bei 35 % (95 ml). Freies Acrolein wurde zu 0,025 % gefunden.

### Beispiel 2

Es wird, wie in Beispiel 1 beschrieben, verfahren mit dem Unterschied, daß Piperazin als Katalysator eingesetzt wird. Es wird eine schwach gelbe Flüssigkeit mit 0,08 % freiem Acrolein erhalten.

### Beispiel 3

207 ml Ethylenglykol werden zusammen mit 1,0 g NaHSO₃ vorgelegt. Bei 20 - 40 °C werden 200 ml Acrolein zugegeben. Es wird 3 h nachgerührt. Das Copolymer wird als viskose, völlig wasserklare Lösung erhalten.

### Beispiel 4

725 ml 1,2-Propylenglykol und 10 ml 1-N NaOH werden in einem Kolben vorgelegt und bei 10 °C 610 ml Acrolein unter Kühlung zugegeben. Man hält im Temperaturbereich bis 35 °C und rührt noch etwa 1 h bei 40 °C nach. Durch Zugabe von Salzsäure wird die viskose, gelbe Lösung neutralisiert. Der Restgehalt an nicht umgesetztem Acrolein liegt bei etwa 0,01 %.

Die mikrobiozide Wirkung der hergestellten Präparate wird mit dem sogenannten Time-Kill-Test (TKT) ermittelt. Bei diesem in Anlehnung an die Empfehlungen des American Petroleum Instituts (API, RP 38 2nd ed., Dec. 1965) durchgeführten Test wird eine hoch angereicherte Keimsuspension (Keimzahl 10⁶ bis 10⁸) mit der gewünschten Menge Biozid versetzt und 24 Stunden bei 25 °C bebrütet. Anschließend wird inaktiviert und eine geometrische Verdünnungsreihe bis 6 durchgeführt; je 1 ml mit 10 ml Nähragar auf Platten vermischt und 48 Stunden bei 37 °C bebrütet. Aus der Auszählung der Kolonien wird die Abtötungsrate berechnet. Die Konzentration an Biozid ist auf den Acroleingehalt bezogen.

### Auswertung:

Es wird der arithmetische Mittelwert aus 2 Werten (Doppelbestimmung) gebildet. Die Keimreduktionszahl Krₜ pro Zeit im TKT (24 h) auch mit Bewertungszahl benannt, berechnet sich mit der Gleichung:
- Krₜ =: logKBE_{(Kontrolle)} - log KBE_{(D)}
- KBE_{(Kontrolle)} =: die Anzahl KBE/ml ohne Einwirkung des Päparates (auch die O-Probe)
- KBE_{(D)} =: die Anzahl KBE/ml nach Einwirkung des Präparates

Für eine gute Wirkung sind Reduktionen von mindestens 5 log-Stufen zu erzielen.

| **Keimart: Pseudomonas aeruginosa ATCC 15442** | | | | | |
|---|---|---|---|---|---|
| **Versuchs-Nr.** | **Temp. °C** | **pH-Wert** | **Zeit [h]** | **Konz. [ppm]** | **KR**_{**t**} |
| 1 | 25 | 6,5 | 24 | 100 | 4,4 |
| 1 | 25 | 6,5 | 24 | 250 | > 7,2 |
| 1 | | 9 | 24 | 100 | 7,2 |
| 2 | 25 | 6,5 | 24 | 250 | > 7,2 |
| 3 | 25 | 6,5 | 24 | 500 | > 7,3 |

| **Versuchs-Nr. 1** | | | | | |
|---|---|---|---|---|---|
| **Keimart** | **Temp. °C** | **pH-Wert** | **Zeit [h]** | **Konz. [ppm]** | **KR**_{**t**} |
| E. coli | 25 | 6,5 | 24 | 100 | > 7,3 |
| | 25 | 9,0 | 24 | 50 | > 7,3 |
| | | | | | |
| Staph. aureus | 25 | 6,5 | 24 | 50 | > 7,3 |
| | 25 | 9,0 | 24 | 25 | > 7,3 |
| | 25 | 9,0 | 24 | 10 | 4 |

Die Wirksamkeit der erfindungsgemäßen Copolymere als Mittel zur Konservierung kann überzeugend in einem Konservierungsbelastungstest nachgewiesen werden.

### Konservierungsbelastungstest:

In 100 ml Polyethylenbecher werden 50 g einer nicht konservierten frisch zubereiteten Dispersionsfarbe gegeben. Danach werden die zu prüfenden Substanzen eingewogen und homogen verteilt. Als Kontrolle dient ein unkonserviertes Farbenmuster.

Die Probebecher werden während der Restzeit bei 25 °C und 65 % rel. Luftfeuchte in einem Kühlbrutschrank gelagert.

Drei Tage nach Zusatz der Konservierungsmittel werden die Proben mit 0,5 ml eines Keimgemisches, bestehend aus Alcaligenes denitrificans, E. coli, Klebsiella pneumoniae, Proteus mirabilis, Proteus vulgaris, Pseudomonas aeruginosa, Pseudomonas putida, Serratia marcescens, Staphylococcus aureus, beimpft und mit einem Spatel eingerührt. Die Beimpfung wird in wöchentlichem Abstand insgesamt siebenmal durchgeführt. Nach guter Durchmischung der Probebecher werden nach 3 bzw. 7 Tagen Ausstriche auf CASO-Agar angefertigt. Die Ablesung der Ausstriche erfolgt nach dreitägiger Inkubation bei 25 bis 30 °C im Brutschrank. Negative Ausstriche werden sicherheitshalber weitere zwei Tage beobachtet und nochmals beurteilt.

Der Bewuchs wird nach folgendem Schema beurteilt:

| | |
|---|---|
| 0 | keine Bakterien |
| 0 - 1 | bis zu 10 Bakterien/KBE |
| 1 | bis zu 30 Bakterien/KBE |
| 2 | bis zu 100 Bakterien/KBE |
| 3 | bis zu 250 Bakterien/KBE |
| 3 - 4 | bis zu 500 Bakterien/KBE |
| 4 | bis zu 1000 Bakterien/KBE |
| 5 | Ausstrich zu 85 % bewachsen |
| 6 | Ausstrich zu 100 % bewachsen, dichter Rasen |

KBE = Keimbildende Einheiten

| **Woche \ Beimpfung** | **1** | | **2** | | **3** | | **4** | | **5** | | **6** | | **7** | |
|---|---|---|---|---|---|---|---|---|---|---|---|---|---|---|
| Ausstriche | 3d | 7d | 3d | 7d | 3d | 7d | 3d | 7d | 3d | 7d | 3d | 7d | 3d | 7d |
| Titer KBE/ml | 2,7 x 10⁷ | | 4,2 x 10⁷ | | 3,7 x 10⁷ | | 4,0 x 10⁷ | | 4,0 x 10⁷ | | 4,0 x 10⁷ | | 5,9 x 10⁷ | |
| Datum | 14.11.95 | | 21.11.95 | | 28.11.95 | | 05.12.95 | | 12.12.95 | | 19.12.95 | | 03.01.96 | |
| O-Probe | 3-4 | 2 | 4 | 4 | 6 | 6 | 6 | 6 | 6 | 6 | 6 | 6 | 6 | 6 |
| Polymer aus Beispiel 1 0,05 % | 0 | 0 | 0 | 0 | 0 | 0 | 0 | 0 | 0 | 0 | 0 | 0 | 0 | 0 |
| Polymer aus Beispiel 4 0,05 % | 0 | 0 | 0 | 0 | 0 | 0 | 0 | 0 | 0 | 0 | 0 | 0 | 0 | 0 |
| Polymer aus Beispiel 1 0,025 % | 0 | 0 | 0 | 0 | 0 | 0 | 0 | 0 | 0 | 0 | 0 | 0 | 0 | 0 |
| Polymer aus Beispiel 4 0,025 % | 0 | 0-1 | 0-1 | 0 | 0-1 | 0 | 0 | 0 | 0-1 | 0 | 0-1 | 0 | 0-1 | 0 |
| Polymer aus Beispiel 1 0,01 % | 0 | 0-1 | 0-1 | 0 | 0-1 | 0 | 0-1 | 0 | 0-1 | 0 | 0-1 | 0 | 0-1 | 0 |

In einer mit 0,1 % versetzten Dispersionsfarbe lassen sich nach 5 Monaten 6 ppm freies Acrolein mittels Hochdruckflüssigkeitschromatographie nachweisen.

### Acrolein-Abspaltung von Produkt gemäß Beispiel 1 und Beispiel 4 in Pufferlösungen bei pH 9

### Verwendete Lösungen:

Beispiel 1: 2 % Polymer in Pufferlösung pH 9 der Fa. Merck
Beispiel 4: 2 % Polymer in Pufferlösung pH 9 der Fa. Merck

### Meßwerte-Tabelle

| **Verweilzeit [h]** | **Freigesetztes Acrolein [ppm] Beispiel 1** | **Freigesetztes Acrolein [ppm] Beispiel 4** |
|---|---|---|
| 0 | 216 | 75 |
| 2 | 1416 | 490 |
| 5 | 2035 | 680 |
| 7 | 2190 | 750 |
| 24 | 1773 | 650 |
| 48 | 1354 | 500 |
| 72 | 977 | 462 |
| 100 | 812 | 404 |

Diese Werte sind in der Figur 2 graphisch dargestellt.

## Patentansprüche

1. Acrolein freisetzende Copolymere, hergestellt aus Acrolein und einem oder mehreren mehrwertigen Alkoholen, gekennzeichnet durch
Freisetzung von monomerem Acrolein in wässrigen Systemen.

2. Verfahren zur Herstellung des Acrolein freisetzenden Copolymers gemäß Anspruch 1, dadurch gekennzeichnet, daß man Acrolein zu dem polymerisierbaren Reaktionsmedium, das im wesentlichen wasserfrei ist und in dem der für die Copolymerisation notwendige Katalysator aus der Gruppe der Alkali- und/oder Erdalkalihydrogensulfite, basischen anorganischen Verbindungen und/oder basischen organischen Verbindungen gelöst ist, zugibt und die Temperatur des Reaktionsmediums nicht über 50 °C steigen läßt.

3. Verwendung des Acrolein freisetzenden Copolymers gemäß Anspruch 1 als in wasserhaltigen Systemen Acrolein freisetzende Verbindungen für biozide Zwecke.

4. Verfahren zum Konservieren von Stoffen, dadurch gekennzeichnet, daß man den Stoffen das Acrolein freisetzende Copolymer gemäß Anspruch 1 als Biocid zusetzt.

## Claims

1. Acrolein-releasing copolymers prepared from acrolein and one or more polyhydric alcohols, characterised by
release of monomeric acrolein in aqueous systems.

2. A process for the preparation of the acrolein-releasing copolymer according to claim 1, characterised in that acrolein is added to the polymerisable reaction medium which is substantially water-free and in which is dissolved the catalyst required for copolymerisation from the group comprising alkali- and/or alkaline earth hydrogen sulfites, basic inorganic compounds and/or basic organic compounds, and the temperature of the reaction medium is not allowed to rise above 50°C.

3. The use of the acrolein-releasing copolymer according to claim 1 as acrolein-releasing compounds in water-containing systems for biocidal purposes.

4. A process for preserving substances, characterised in that the acrolein-releasing copolymer according to claim 1 is added to the substances as a biocide.

## Revendications

1. Copolymères libérant de l'acroléine produits à partir d'acroléine et d'un ou plusieurs alcools plurifonctionnels,
caractérisés par
la libération d'acroléine monomère dans des systèmes aqueux.

2. Procédé de production de copolymère libérant de l'acroléine, selon la revendication 1,
caractérisé en ce qu'
on verse de l'acroléine dans le milieu réactionnel polymérisable qui est pour l'essentiel anhydre et dans lequel on dissout le catalyseur choisi dans le groupe formé des hydrogénosulfites de métal alcalin et/ou alcalino-terreux, des composés basiques minéraux et/ou des composés basiques organiques, nécessaire pour la copolymérisation, et on ne laisse pas monter la température du milieu réactionnel au-dessus de 50°C.

3. Utilisation du copolymère libérant de l'acroléine selon la revendication 1, comme composés libérant de l'acroléine dans des systèmes contenant de l'eau, à des fins biocides.

4. Procédé de conservation de substances,
caractérisé en ce qu'
on ajoute aux substances le copolymère qui libère de l'acroléine selon la revendication 1 comme biocide.
